# EUROPEAN PATENT APPLICATION

(11) **EP 3 505 297 A1**
(43) Date of publication of application: **03.07.2019**
(21) Application number: 18212889.2
(22) Date of filing: 17.12.2018
(51) Int. Cl.: B23Q 17/00, B23Q 17/09, B23Q 17/12, B23Q 11/00, G05B 23/02, G05B 19/406

(54) **CUTTING MACHINE**

(30) Priority: 28.12.2017 JP 2017254341
(71) Applicant: DGSHAPE Corporation, Hamamatsu-shi, Shizuoka 431-2103 (JP)
(72) Inventor: SAGISAKA, Yusuke, Hamamatsu-shi, Shizuoka, 431-2103 (JP)
(74) Representative: Grünecker Patent- und Rechtsanwälte PartG mbB

(57) **Abstract**

A cutting machine of the present invention includes a main shaft having a spindle that rotates, a sensor that is provided on the main shaft to measure a vibration entailing the rotation of the spindle and transmit a signal corresponding to the measured vibration, and a controller. The controller includes a receiver that receives a signal from the sensor, and a diagnoser that identifies an abnormal vibration when a value of the measured vibration exceeds a predetermined threshold value.

## Description

### BACKGROUND OF THE INVENTION

### Field of the Invention

The present invention relates to a cutting machine.

### Description of the Related Art

There are conventional cutting machines known in the art that are used to make artificial teeth, etc., by way of a cut process, for example. Japanese Laid-Open Patent Publication No. 2017-94436, for example, discloses a cutting machine including a holder that holds a workpiece, a spindle (main shaft) for rotating a machining tool, a mechanism for three-dimensionally translating the holder and the spindle, and a mechanism for rotating the holder in two directions.

With a cutting machine such as that disclosed in Japanese Laid-Open Patent Publication No. 2017-94436, the spindle can possibly deteriorate and break over use. When the spindle deteriorates or breaks, it may lead to a significant breakdown of the cutting machine or may influence the quality of the cut object.

### SUMMARY OF THE INVENTION

The present invention has been made in view of such a problem, and an object thereof is to provide a cutting machine that is capable of diagnosing the deterioration or breakdown of the spindle.

A cutting machine disclosed herein includes: a main shaft having a spindle that is configured to rotate; a sensor that is provided on the main shaft to measure a vibration entailing the rotation of the spindle and transmit a signal corresponding to the measured vibration; and a controller. The controller includes a receiver that is configured to receive the signal from the sensor, and a diagnoser that is configured to identify an abnormal vibration when a value of the measured vibration exceeds a predetermined threshold value.

With the cutting machine set forth above, it is possible to measure a vibration entailing the rotation of the spindle, and to diagnose the deterioration or breakdown of the spindle by identifying whether or not the vibration is abnormal.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. **1** is a perspective view of a cutting machine of one embodiment.
FIG. **2** is a perspective view showing a cutting machine with the door open.
FIG. **3** shows a III-III cross section of FIG. **1**.
FIG. **4** is a perspective view showing a configuration of a holder member, a rotation mechanism and a magazine.
FIG. **5** is a cross-sectional view showing a configuration around a main shaft.
FIG. **6** is a block diagram of the cutting machine.
FIG. **7** is a graph showing the result of measuring the initial vibration of the main shaft and the threshold value.

### DETAILED DESCRIPTION OF THE PREFERRED EMBODIMENTS

Cutting machines according to embodiments of the present invention will now be described with reference to the drawings. Note that it is understood that the embodiments described herein are not intended to limit the present invention. Members and portions of like functions are denoted by like reference signs, and redundant descriptions will be omitted or shortened as necessary.

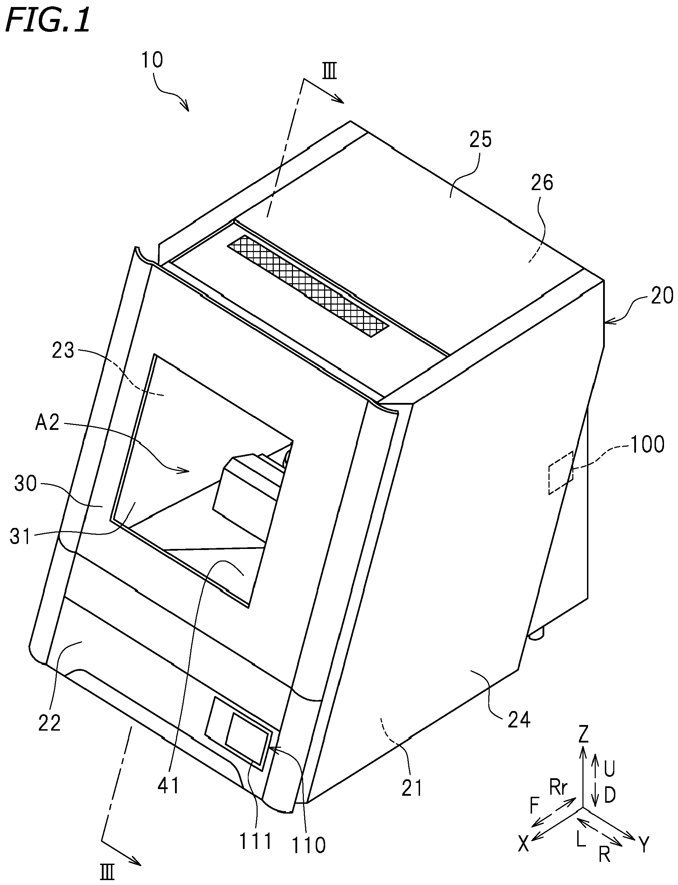

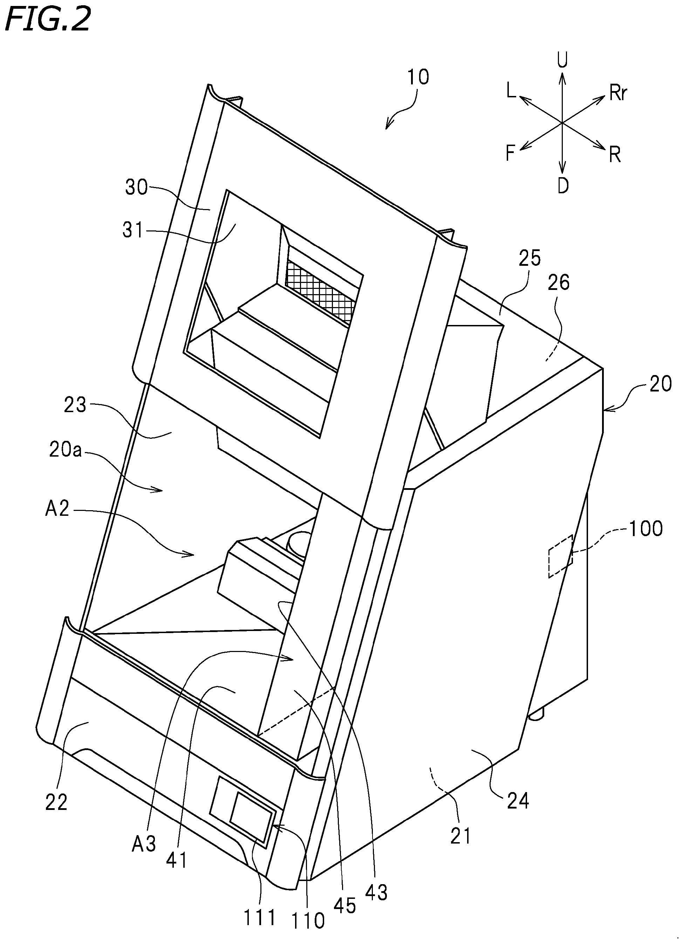

FIG. **1** is a perspective view of a cutting machine **10** of one embodiment. FIG. **2** is a perspective view showing the cutting machine **10** with a door **30** of FIG. **1** open. The terms "left", "right", "up" and "down", as used in the description below, refer to these directions as seen from the user being on the side of the door **30** of the cutting machine **10**. The direction from the user toward the cutting machine **10** will be referred to as "rear", and the opposite direction as "front". The designations F, Rr, L, R, U and D, as used in the figures, refer to front, rear, left, right, up and down, respectively. It is assumed that where the X axis, the Y axis and the Z axis are orthogonal to each other, the cutting machine **10** of the present embodiment is placed on a plane that is defined by the X axis and the Y axis. Herein, the X axis extends in the front-rear direction. The Y axis extends in the left-right direction. The Z axis extends in the up-down direction. Note however that these directions are defined merely for the purpose of discussion, and do not in any way limit how the cutting machine **10** is placed.

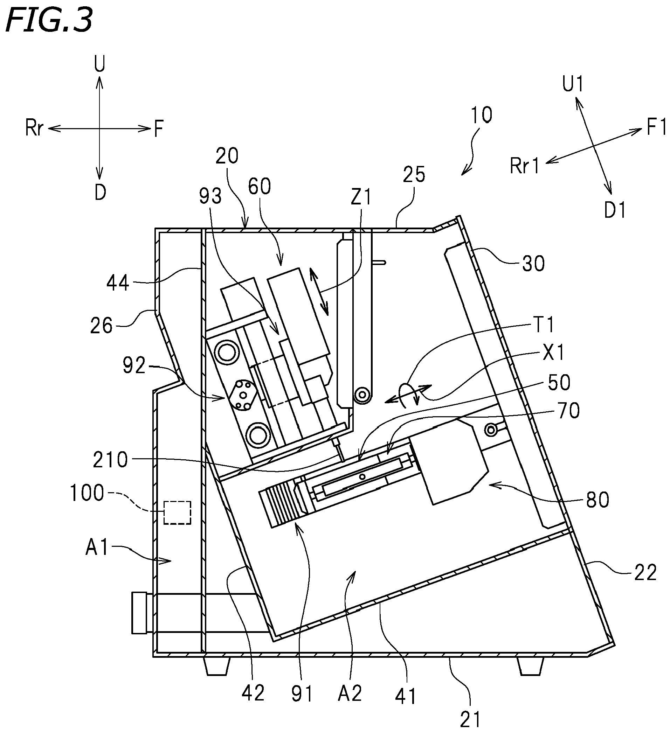

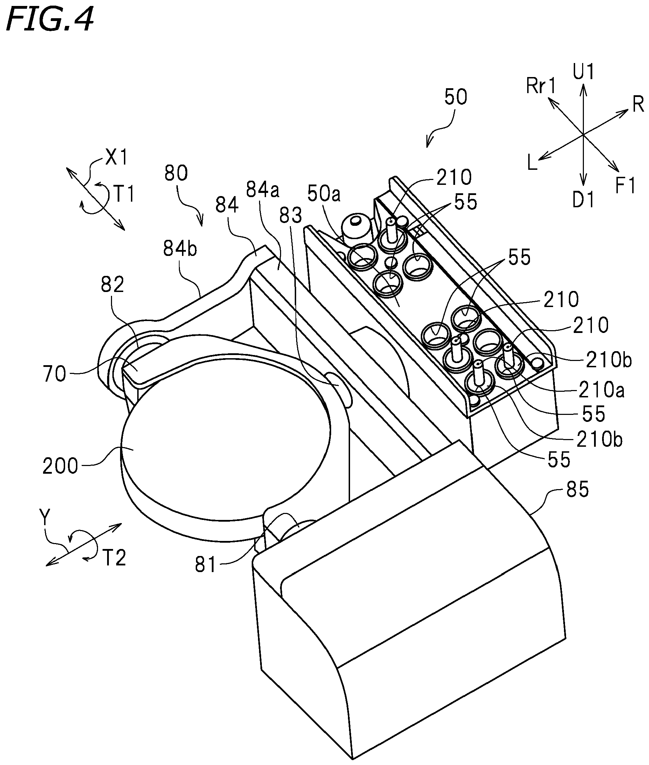

As shown in FIG. **1**, the cutting machine **10** is formed in a box shape. In the present embodiment, the cutting machine **10** includes a housing **20** and the door **30**. The housing **20** accommodates a holder member **70** (see FIG. **4**) that holds the workpiece **200** (see FIG. **4**), a main shaft **60** (see FIG. **3**) that rotates a tool **210** (see FIG. **3**), etc. The housing **20** has a bottom surface wall **21**, a front surface wall **22**, a left side wall **23**, a right side wall **24**, a top surface wall **25**, and a back surface wall **26.** Each member of the housing **20** is formed from a steel plate, or the like. The bottom surface wall **21** is herein provided parallel to the XY plane. The bottom surface wall **21** forms the bottom surface of the entire cutting machine **10**. The left side wall **23** is connected to the left edge of the bottom surface wall **21**. The left side wall **23** extends in the Z direction from the left edge of the bottom surface wall **21**. The right side wall **24** is connected to the right edge of the bottom surface wall **21**. The right side wall **24** extends in the Z direction from the right edge of the bottom surface wall **21**. The back surface wall **26** is connected to the rear edge of the bottom surface wall **21**. The back surface wall **26** extends in the Z direction from the rear edge of the bottom surface wall **21.** The left edge and the right edge of the back surface wall **26** are connected to the rear edge of the left side wall **23** and the rear edge of the right side wall **24**, respectively. The top surface wall **25** is formed parallel to the bottom surface wall **21**, and is connected to the upper edge of the left side wall **23**, the upper edge of the right side wall **24** and the upper edge of the back surface wall **26**. The front surface wall **22** is connected to the front edge of the bottom surface wall **21**. The front surface wall **22** extends in an upper diagonal direction from the front edge of the bottom surface wall **21.** Specifically, it extends upward while being inclined rearward. The left edge of the front surface wall **22** is connected to the front edge of the left side wall **23**. The right edge of the front surface wall **22** is connected to the front edge of the right side wall **24**. The height of the front surface wall **22** is less than the left side wall **23** and the right side wall **24**. Therefore, an opening **20a** is formed on the front surface of the housing **20**.

The door **30** is provided in the opening **20a** of the housing **20**. The door **30** can be opened and closed. Specifically, the door **30** is attached to the housing **20** so that the door **30** can slide in the up-down direction along the front edge of the left side wall **23** and the front edge of the right side wall **24.** As the door **30** slides in the up-down direction, the inside and the outside of the housing **20** communicate with each other through the opening **20a** on the front side of the housing **20.** Note that the door **30** herein opens and closes by sliding in the up-down direction, but it may be provided in various other embodiments, e.g., it may be opened and closed in the lateral direction. The door **30** is provided with a window **31**, through which the inside of the housing **20** can be seen.

The inside of the housing **20** is divided into a plurality of areas by means of internal walls. FIG. **3** shows a III-III cross section of FIG. **1**. As shown in FIG. **2** and FIG. **3**, a lower surface wall **41**, a rear wall **42**, a partition wall **43** and a rear partition wall **44** are provided as internal walls inside the housing **20**. The rear partition wall **44** is arranged close to the back surface wall **26** inside the housing **20,** and extends in the up-down direction. The rear partition wall **44** divides the inside of the housing **20** into the front-side area and the rear-side area. The rear-side space defined by the rear partition wall **44** forms a back-side area **A1.** A controller **100,** etc., are accommodated in the back-side area **A1**. The lower surface wall **41** and the rear wall **42** are arranged in the front-side space defined by the rear partition wall **44.** The lower surface wall **41** is connected vertical to the front surface wall **22** of the housing **20** at the upper edge of the front surface wall **22**. As described above, the front surface wall **22** is inclined rearward, and the lower surface wall **41** arranged vertical to the front surface wall **22** is also inclined with respect to the XY plane. Specifically, the lower surface wall **41** is inclined downward while extending in the front-to-rear direction. The rear wall **42** is connected vertical to the lower surface wall **41** at the rear edge of the lower surface wall **41**. As shown in FIG. **3**, the rear wall **42** extends in an upper diagonal direction from the connection with the lower surface wall **41** and is connected to the rear partition wall **44.** The lower surface wall **41**, the rear wall **42**, and a portion of the rear partition wall **44** that is above the rear wall **42** together form an internal space inside the housing **20**. The internal space is further divided into a process area **A2** and a control area **A3** by means of the partition wall **43,** which is arranged vertical to the lower surface wall **41.**

As shown in FIG. **2****,** the internal space defined by the lower surface wall **41,** the rear wall **42** and the rear partition wall **44** is further divided left and right by the partition wall **43**. The left-side space is the process area **A2**, where the workpiece **200** is cut. The right-side space is the control area **A3** that accommodates a driver for controlling the rotation and movement of the holder member **70** and a magazine **50**, etc. A cover **45** is attached to the front surface of the control area **A3** for isolating the control area **A3** from the outside. The process area **A2** is larger than the control area **A3.**

As described above, the process area **A2** and the control area **A3** are inclined downward while extending rearward with respect to the X direction and the Z direction of the cutting machine **10.** Accordingly, in the process area **A2**, the direction vertical to the lower surface wall **41** will be referred to as the Z1 direction. The direction perpendicular to the front surface wall **22**, which is orthogonal to the lower surface wall **41**, will be referred to as the X1 direction. The X1 direction, the Y direction and the Z1 direction are orthogonal to each other. Moreover, for the X1 direction and the Z1 direction, which are orthogonal to each other, the front direction and the rear direction along the X1 direction will be denoted as F1 and Rr1, respectively, and the upper direction and the lower direction along the Z1 direction as U1 and D1, respectively. Note however that these directions are defined merely for the purpose of discussion, and do not in any way limit how the cutting machine **10** is placed.

As shown in FIG. **3****,** the holder member **70,** a rotation mechanism **80,** the magazine **50**, the main shaft **60**, an X1 direction moving mechanism **91**, a Y direction moving mechanism **92** and a Z1 direction moving mechanism **93** are arranged inside the process area **A2**. FIG. **4** is a perspective view showing a configuration of the holder member **70**, the rotation mechanism **80** and the magazine **50**. As shown in FIG. **4**, in the present embodiment, the holder member **70** for holding the workpiece **200**, the rotation mechanism **80** for rotating the holder member **70**, and the magazine **50** accommodating bar-shaped tools **210** are assembled together.

The holder member **70** holds the workpiece **200.** Herein, the workpiece **200** is formed in a circular plate shape. The workpiece **200** is a material of an artificial tooth, for example. The holder member **70** is formed in a semicircular arc shape. In the present embodiment, the holder member **70** includes a screw (not shown), or the like, and the workpiece **200** is secured as the user tightens the screw, or the like.

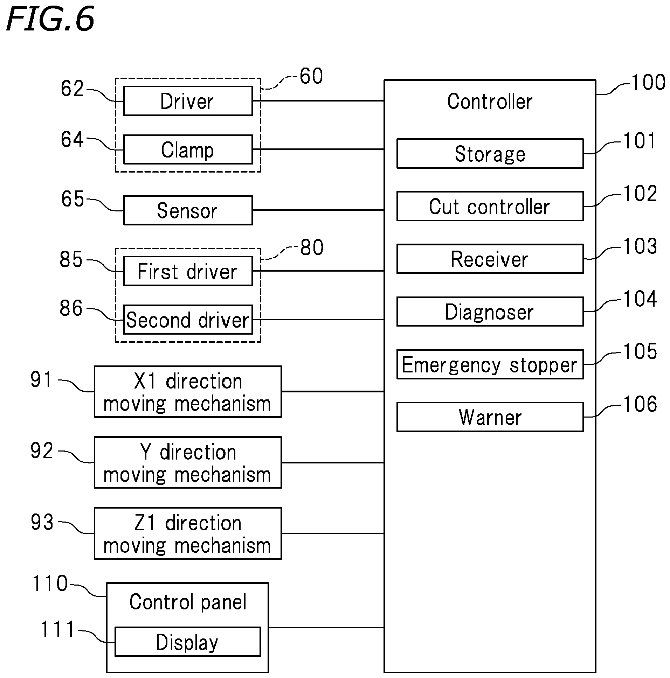

The rotation mechanism **80** supports the holder member **70**. The rotation mechanism **80** includes a first rotation shaft **81,** a second rotation shaft **82,** a third rotation shaft **83,** a support member **84**, a first driver **85** and a second driver **86** (not shown in FIG. **4**; see FIG. **6**). As shown in FIG. **4**, the first rotation shaft **81** and the second rotation shaft **82** rotatably support the holder member **70** from the F1 direction and the Rr1 direction, respectively. The first rotation shaft **81** is connected to the first driver **85**, which is provided on the F1 direction side of the holder member **70.** There is no particular limitation on the first driver **85,** and it may be a motor, for example. The first driver **85** rotates the first rotation shaft **81** in the direction T1 about the X1 axis. By the drive of the first driver **85,** the holder member **70** rotates in the direction T1. The holder member **70** and the first driver **85** are supported by the support member **84**, which is formed in an L-letter shape. The support member **84** includes a first support portion **84a** and a second support portion **84b.** The first support portion **84a** extends in the X1-axis direction. The second support portion **84b** extends leftward from the rear edge of the first support portion **84a.** The front edge of the first support portion **84a** supports the first driver **85**. The second support portion **84b** supports the second rotation shaft **82.** The third rotation shaft **83** is connected to a central portion of the first support portion **84a.** The third rotation shaft **83** is connected to the holder member **70** at a position that corresponds to the center thereof in the X1-axis direction. The third rotation shaft **83** is connected to the second driver **86** not shown in FIG. **4** (see FIG. **6**). By the drive of the second driver **86**, the third rotation shaft **83** rotates the first support portion **84a** of the support member **84** in the direction T2 about the Y axis. By the rotation of the support member **84** in the direction T2, the holder member **70** also rotates in the direction T2.

As shown in FIG. **4****,** the magazine **50** supports the holder member **70** via the third rotation shaft **83** and the support member **84** of the rotation mechanism **80.** The magazine **50** is formed in a box shape. A plurality of hole-shaped stockers **55** are formed on an upper surface **50a** of the magazine **50.** Each stocker **55** accommodates a tool **210.** In the present embodiment, the tool **210** is inserted in the stocker **55** with an upper end portion **210a** thereof exposed. With a plurality of stockers **55** provided on the magazine **50**, various types of tools **210** can be accommodated in the magazine **50.** In the present embodiment, ten stockers **55** are provided on the magazine **50.** The ten stockers **55** are provided on the magazine **50** in two rows arranged in the Y-axis direction, each row including five stockers arranged in the X1-axis direction.

The magazine **50** is secured on the X1 direction moving mechanism **91** (not shown in FIG. **4**; see FIG. **3**) provided on the right side. While there is no particular limitation on the configuration of the X1 direction moving mechanism **91,** it for example includes a motor, a screw feed mechanism, etc. The X1 direction moving mechanism **91** is connected to the controller **100** and is controlled by the controller **100**. By the drive of the X1 direction moving mechanism **91**, the holder member **70** moves in the X1 direction integral with the magazine **50**. In this process, the workpiece **200** held on the holder member **70** also moves in the X1 direction together with the holder member **70.**

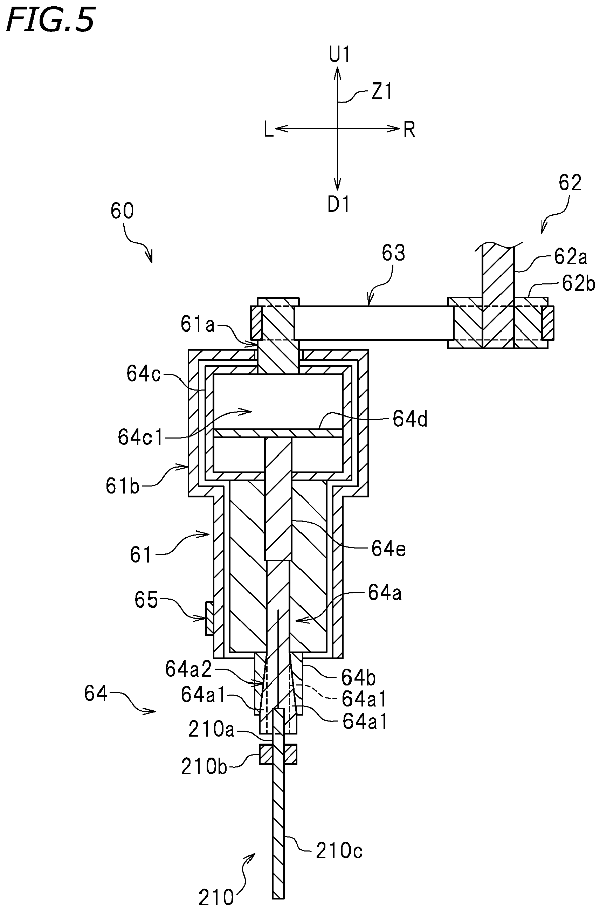

Tools **210** are each a tool for cutting the workpiece **200.** Herein, bar-shaped tools **210** are used. As shown in FIG. **4****,** the tool **210** is provided with a flange **210b.** Herein, the flange **210b** is shaped corresponding to the hole-shaped stocker **55.** When the tool **210** is accommodated in the stocker **55**, the flange **210b** is fitted into the stocker **55.** As shown in FIG. **4**, with the tool **210** inserted in the stocker **55**, the upper end portion **210a** above the flange **210b** protrudes from the stocker **55.** The upper end portion **210a** is clamped by the main shaft **60.** A cutter **210c** (see FIG. **5**) is provided below the flange **210b.** In the present embodiment, there are tools **210** that have cutters **210c** of various shapes. As the main shaft **60,** with the tool **210** clamped thereon, rotates about the Z1 axis, the tool **210** also rotates about the Z1 axis. The cutter **210c** of the tool **210,** which is rotating, comes into contact with the workpiece **200,** thus cutting the workpiece **200.**

The main shaft **60** clamps and rotates the tool **210.** FIG. **5** is a cross-sectional view showing a configuration around the main shaft **60.** As shown in FIG. **5**, the main shaft **60** includes a spindle **61** that rotates, a driver **62** and a belt **63**, and the spindle **61** includes a clamp **64**. The driver **62** rotates the spindle **61**. The driver **62** and the spindle **61** are connected via the belt **63**.

The spindle **61** includes a rotation shaft **61a** and a casing **61b**. The casing **61b** includes a bearing, or the like, and supports the rotation shaft **61a** so that the rotation shaft **61a** can rotate about the Z1 axis. The casing **61b** also allows the spindle **61** to be attached to the cutting machine **10.** The casing **61b** is a cylindrical member, for example.

A large portion of the rotation shaft **61a** rotates inside the casing **61b** about the Z1 axis. Note however that an upper end portion and a lower end portion of the rotation shaft **61a** protrude out of the casing **61b**. The rotation shaft **61a** is a cylindrical member extending in the Z1 axis direction. The belt **63** is wound around a portion of the rotation shaft **61a** near the upper end thereof that is projecting out of the casing **61b**. The belt **63** is an endless belt that transmits the power of the driver **62** to the rotation shaft **61a**. The tool **210** is clamped by the clamp **64** on the lower end of the rotation shaft **61a.** Although the details will be described later, the rotation shaft **61a** includes the clamp **64** therein. The tool **210** is clamped by the clamp **64**, and rotates together with the rotation of the rotation shaft **61a**.

The driver **62** rotates the rotation shaft **61a** of the spindle **61.** The driver **62** is a motor, for example. The driver **62** includes a drive shaft **62a** that rotates and a pulley **62b.** The pulley **62b** is fixed to an end portion of the drive shaft **62a** in the D1 direction. The belt **63** is wound around the pulley **62b** of the driver **62.** With the belt **63** and the pulley **62b,** the rotation shaft **61a** of the spindle **61** is connected to the drive shaft **62a** of the driver **62** and rotates together with the rotation of the drive shaft **62a**. The driver **62** is connected to the controller **100** and is controlled by the controller **100**. In accordance with the control by the controller **100**, the driver **62** rotates the spindle **61** with specified timing and a specified number of revolutions.

The clamp **64** clamps the tool **210**. The clamp **64** is provided on the spindle **61**. As shown in FIG. **5**, the clamp **64** includes a chuck **64a**, a fastener **64b**, a space-defining member **64c**, a movable plate **64d**, and a shaft **64e**.

The chuck **64a** clamps the upper end portion **210a** of the tool **210**. The tip of the chuck **64a** is divided into three collets **64a1**. The chuck **64a** clamps the tool **210** by pinching the upper end portion **210a** of the tool **210** by the three collets **64a1**. Note however that the number of the collet **64a1** does not need to be three, and it may be two. It may alternatively be four or more. The three collets **64a1** extend in the Z1 axis, and are connected together at the upper end portion thereof. When the tool **210** is clamped by the chuck **64a,** the three collets **64a1** are arranged so as to surround the tool **210.** In the present embodiment, the outer surfaces of the three collets **64a1** are inclined so as to flare out toward the distal end thereof. Herein, the portion that flares out toward the distal end is referred to as a flared portion **64a2.**

The fastener **64b** fastens the three collets **64a1** of the chuck **64a.** By being fastened by the fastener **64b**, the chuck **64a** can clamp the tool **210.** Herein, the three collets **64a1** of the chuck **64a** are inserted into the fastener **64b.** The chuck **64a** is movable in the up-down direction (herein, the Z1 axis direction) relative to the fastener **64b.** Herein, as the chuck **64a** moves in the U1 direction, the flared portion **64a2** moves into the fastener **64b.** Thus, the gap between the three collets **64a1** decreases, thereby generating a force to clamp the tool **210.** On the other hand, as the chuck **64a** moves in the D1 direction, the flared portion **64a2** of the chuck **64a** moves in the D1 direction of the fastener **64b.** Therefore, the gap between the three collets **64a1** increases, thereby relaxing the fastening of the tool **210** by the chuck **64a.**

In the present embodiment, the movement of the chuck **64a** in the up-down direction is done by adjusting the air in the space-defining member **64c.** The space-defining member **64c** is provided above the chuck **64a** and the fastener **64b.** The space-defining member **64c** defines a space **64c1** therein. An air feeder (not shown) is connected to the space-defining member **64c.** Although there is no particular limitation on the type of the air feeder, it is an air compressor, for example. The air feeder generates compressed air to be fed into the space **64c1.** A solenoid valve (not shown) is provided on a path that connects together the air feeder and the space **64c1.** By opening/closing the solenoid valve, the amount of air to be fed from the air feeder into the space-defining member **64c** is adjusted.

In the present embodiment, the movable plate **64d** is arranged in the space **64c1** surrounded by the space-defining member **64c.** The movable plate **64d** moves in the up-down direction (the Z1 axis direction) in the space **64c1.** The movable plate **64d** is connected to the chuck **64a** via the shaft **64e**. The shape of the movable plate **64d** corresponds to the shape of the lateral cross section of the space-defining member **64c.** Herein, the air from the air feeder is fed into a part of the space **64c1** that is above the movable plate **64d.** Then, when the amount of air fed into the space above the movable plate **64d** increases, the movable plate **64d** moves down (the D1 direction). As the movable plate **64d** moves in the D1 direction, the chuck **64a** moves in the D1 direction. As the chuck **64a** moves in the D1 direction, the fastening of the chuck **64a** by the fastener **64b** is relaxed, thereby releasing the tool **210** from the chuck **64a**. Note that the chuck **64a** and the movable plate **64d** may be forced upward (the U1 direction) by a spring (not shown). When the air feeder is not feeding air into the space-defining member **64c**, the tool **210** is clamped by the three collets **64a1.**

A sensor **65** is provided on the outer surface of the casing **61b** of the spindle **61.** The sensor **65** measures a vibration of the main shaft **60** entailing the rotation of the spindle **61.** The sensor **65** transmits a signal corresponding to the measured vibration to the controller **100.** The signal is an analog current signal, for example. In the present embodiment, the sensor **65** includes an acceleration sensor. The acceleration sensor detects the acceleration of the sensor itself when the sensor is moved with an acceleration, and the magnitude of the vibration of the main shaft **60** is herein measured in terms of acceleration. For example, the acceleration sensor measures an acceleration based on a change in the distance between a movable portion and a non-movable portion when the movable portion moves due to the acceleration applied thereto. The distance by which the movable portion moves is measured based on, for example, a change in capacitance, a distortion of a spring, etc. While there is no limitation on the principle of measurement of the acceleration sensor, the measurement range may be 2000 m/s² to 3000 m/s² or more.

The location where the vibration of the main shaft **60** is measured is preferably a location where it vibrates reproducibly and with a great magnitude. It is believed that when the magnitude of the vibration is great, the measurement is less likely to be influenced by an external disturbance and the measurement error is smaller. The sensor **65** is attached near the lower end of the casing **61b.** With the casing **61b**, the vibration entailing the rotation of the spindle **61** can be greater near the lower end than near the upper edge. While the acceleration sensor can measure the acceleration separately in the X1 direction, the Y direction and the Z1 direction, for example, it is preferred to use the three-axis combined acceleration for the X1 direction, the Y direction and the Z1 direction.

As shown in FIG. **3**, the main shaft **60** is moved in the Y direction and the Z1 direction by the Y direction moving mechanism **92** and the Z1 direction moving mechanism **93**, respectively. While there is no particular limitation on the configuration of the Y direction moving mechanism **92** and the Z1 direction moving mechanism **93**, they for example each include a motor, a screw feed mechanism, etc. The Y direction moving mechanism **92** and the Z1 direction moving mechanism **93** are each connected to the controller **100** and controlled by the controller **100**. By the drive of the Y direction moving mechanism **92** and the Z1 direction moving mechanism **93**, the main shaft **60** moves in the Y direction and the Z1 direction. In this process, the tool **210** clamped by the clamp **64** also moves in the Y direction and the Z1 direction together with the main shaft **60**.

As shown in FIG. **1**, the cutting machine **10** of the present embodiment includes a control panel **110** on the front surface wall **22** of the housing **20**. The user uses the control panel **110** to operate the cutting machine **10.** A display **111** is provided on the control panel **110.** The display **111** displays the screen indicating device statuses, etc. Although not shown in the figure, the control panel **110** may also include operation buttons, a buzzer for alarming the user, etc., other than the display **111.** The control panel **110** is electrically connected to the controller **100.**

The controller **100** is provided in the back-side area **A1**. FIG. **6** is a block diagram of the cutting machine **10** of the present embodiment. As shown in FIG. **6**, the controller **100** is connected to the driver **62** and the clamp **64** of the main shaft **60**, the sensor **65**, the first driver **85** and the second driver **86** of the rotation mechanism **80**, the X1 direction moving mechanism **91**, the Y direction moving mechanism **92,** and the Z1 direction moving mechanism **93**. The controller **100** includes a storage **101**, a cut controller **102**, a receiver **103**, a diagnoser **104**, an emergency stopper **105**, and a warner **106.**

There is no particular limitation on the configuration of the controller **100**. The controller **100** is a microcomputer, for example. There is no particular limitation on the hardware configuration of the microcomputer, but the microcomputer for example includes an interface (I/F) for receiving cut data, etc., from an external device such as a host computer, a central processing unit (CPU) for executing instructions of a control program, a ROM (read only memory) storing a program to be executed by the CPU, a RAM (random access memory) to be used as a working area where the program is developed, and a storage device such as a memory for storing various data.

The storage **101** stores cut data. The storage **101** temporarily stores the cut data transmitted from an external computer, or the like, for example.

The cut controller **102** performs a cut process based on the cut data stored in the storage **101**. The cut controller **102** controls the driver **62** and the clamp **64** of the main shaft **60**, the first driver **85** and the second driver **86** of the rotation mechanism 80, the X1 direction moving mechanism **91**, the Y direction moving mechanism **92** and the Z1 direction moving mechanism **93** to perform a cut process on the workpiece **200** while changing the positional relationship between the workpiece **200** and the tool **210.** In this process, the tool **210** is replaced with another and the number of revolutions of the spindle **61** is changed as necessary.

The receiver **103** receives a signal from the sensor **65**. The controller **100** knows the magnitude of the vibration of the main shaft **60** entailing the rotation of the spindle **61** by receiving signals from the sensor **65** by means of the receiver **103**.

The diagnoser **104** identifies an abnormal vibration of the main shaft **60** when the value of the vibration measured by the sensor **65** exceeds a predetermined threshold value. The method for setting the threshold value will be described later.

When the diagnoser **104** identifies an abnormal vibration of the main shaft **60**, the emergency stopper **105** stops the rotation of the spindle **61.** The emergency stopper **105** stops the rotation of the spindle **61** so that the abnormal vibration of the main shaft **60** does not cause a serious failure of the cutting machine **10** and that the quality of the cut process does not deteriorate.

The warner **106** issues a warning when the diagnoser **104** identifies an abnormal vibration of the main shaft **60.** Herein, a warning is issued by displaying a warning message on the display **111** of the control panel **110** or an external display. By this warning message, the user can know of the abnormal vibration of the main shaft **60**. Note however that the method of warning for letting the user know of an abnormal vibration is not limited to the warning message, but may be a sound from a buzzer, or the like, for example. A plurality of means may be used in combination.

With the cutting machine **10** of the present embodiment, after the user sets the workpiece **200** on the holder member **70**, a cut process is performed by a procedure as follows. First, the cutting machine **10** selects a tool **210.** The controller **100** controls the X1 direction moving mechanism **91** and the Y direction moving mechanism **92** to move the main shaft **60** in the U1 direction of a stocker **55** that accommodates a specified tool **210** therein. Moreover, the controller **100** controls the Z1 direction moving mechanism **93** and the clamp **64** so that the specified tool **210** is clamped by the clamp **64**. If the specified tool **210** is already clamped by the clamp **64**, this process may be omitted. If another tool **210** is clamped, a process of returning this other tool **210** to a stocker **55** may be performed first. Then, the controller **100** controls the X1 direction moving mechanism **91**, the Y direction moving mechanism **92** and the Z1 direction moving mechanism **93** to place the tool **210** and the workpiece **200** at specified positions, and controls the rotation mechanism **80** so that the workpiece **200** takes a specified attitude. The driver **62** of the main shaft **60** is instructed to rotate the spindle **61** at a specified number of revolutions. Thereafter, the cut process is performed continuously while varying the positional relationship between the workpiece **200** and the tool **210** and the attitude of the workpiece **200** (also the rotation speed of the spindle **61** in some cases). During the process, the tool **210** is changed to another specified tool **210** as necessary before completing the cut process on the workpiece **200.**

The spindle **61** of the main shaft **60** ages due to the load thereon from the cut process. It may also deteriorate or break down due to a large load applied thereon other than aging. An example of the deterioration or breakdown of the spindle **61** is an increase in shake due to the bearing being worn out, decentering of the spindle **61**, etc. When the spindle **61** deteriorates or breaks down, the vibration entailing the rotation of the rotation shaft **61a** may increase. It is not desirable to continue to use the main shaft **60** in such a condition.

In view of this, the cutting machine **10** of the present embodiment is configured to measure the vibration of the main shaft **60** and to identify an abnormal vibration of the main shaft **60** when the measured vibration value exceeds a predetermined threshold value. Specifically, the cutting machine **10** of the present embodiment includes the sensor **65** that is provided on the main shaft **60** to measure the vibration entailing the rotation of the spindle **61** and transmit a signal corresponding to the measured vibration, the receiver **103** that receives the signal from the sensor **65**, and the diagnoser **104** that identifies an abnormal vibration of the main shaft **60** when the vibration value measured by the sensor **65** exceeds a threshold value. In the present embodiment, the sensor **65** includes an acceleration sensor, and the vibration value is detected as an acceleration.

The threshold value used for identifying an abnormal vibration of the main shaft **60** is set based on a vibration value that is pre-measured by the sensor **65.** More specifically, the threshold value is set to a value that is obtained by multiplying the pre-measured vibration value by a predetermined multiplication value. The measurement of the vibration is performed when manufacturing the cutting machine **10**, for example. Note however that the measurement may be performed at the start of use. In any case, the vibration is measured when the main shaft **60** has not deteriorated yet. Note that the measurement of the vibration is herein performed for each cutting machine **10** in view of the difference between individual machines. However, if the individual difference is small, the same value may be used for every machine.

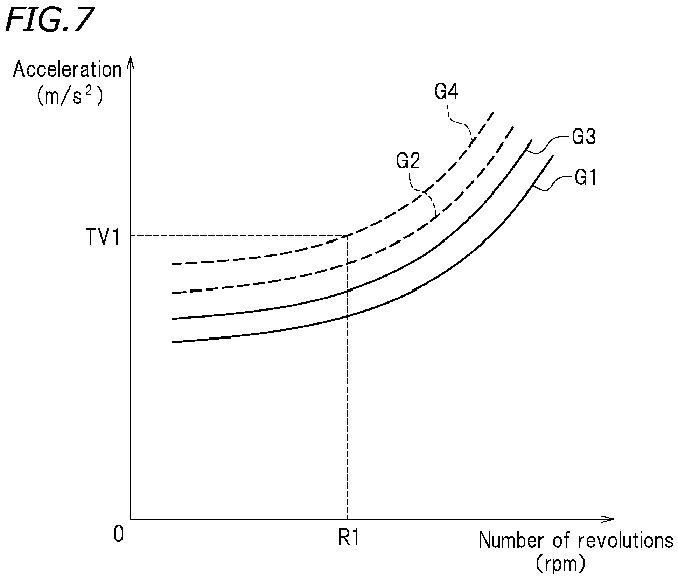

FIG. **7** is a graph showing the result of measuring the initial vibration of the main shaft **60** and the threshold value. The horizontal axis of FIG. 7 is the number of revolutions of the spindle **61.** The vertical axis of FIG. **7** is the acceleration (vibration) of the main shaft **60.** Graph G1 of FIG. **7** is the measurement result of the initial vibration when the tool **210** is not clamped by the clamp **64.** Graph G2 is the threshold value of an abnormal vibration when the tool **210** is not clamped by the clamp **64.** As indicated by graph G1, the initial vibration is measured by varying the number of revolutions of the spindle **61.** Although there is no limitation on the number of revolutions of the spindle **61** for measurement, the measurement may be performed from 1000 rpm to 30000 rpm in increments of 1000 rpm, for example. Graph G1 is obtained by interpolating between vibration values that are measured while varying the number of revolutions of the spindle **61.** Graph G2 is obtained by multiplying the vibration value of graph G1 by a predetermined multiplication value. Therefore, the threshold value is also set based on the number of revolutions of the spindle **61**. Although there is no limitation on the multiplication value to be multiplied with the measurement value to obtain the threshold value from the measured vibration value, it may be set to about 1.2 to about 2, for example. Where the tool **210** is not clamped, when the vibration of the main shaft **60** measured by the sensor **65** exceeds the threshold value represented by graph G2, the diagnoser **104** identifies an abnormal vibration of the main shaft **60**. Cases where the spindle **61** rotates with the tool **210** being not clamped include when the machine is warming up, for example.

Graph G3 of FIG. **7** is the measurement result of the initial vibration of the main shaft **60** when the tool **210** is clamped by the clamp **64.** Graph G4 is the threshold value of the abnormal vibration when the tool **210** is clamped by the clamp **64.** Graph G4 is obtained by multiplying the vibration value of graph G3 by a predetermined multiplication value. As described above, in the present embodiment, the initial vibration is measured with the tool **210** being clamped by the clamp **64** and is measured with the tool **210** being not clamped by the clamp **64.** It is possible to perform more detailed diagnoses by separately diagnosing the vibration when the tool **210** is clamped by the main shaft **60** and the vibration when the tool **210** is not clamped by the main shaft 60.

In the present embodiment, the vibration of the main shaft **60** is measured constantly while the spindle **61** is rotating. In this process, the controller **100** knows whether or not the tool **210** is clamped by the clamp **64.** The controller **100** also knows the number of revolutions of the spindle **61.** For example, if the tool **210** is clamped by the clamp **64** and the number of revolutions is R1, the threshold value of vibration is TV1 based on graph G4 of FIG. **7****.** In this condition, if the vibration measured by the sensor **65** exceeds the threshold value TV1, the measured vibration is identified as an abnormal vibration. Note however that in view of the possibility that an abnormal measurement result is obtained due to an external disturbance, or the like, it may be identified as an abnormal vibration when the vibration measured by the sensor **65** exceeds the threshold value TV1 for a predetermined period of time or longer.

In the present embodiment, when the diagnoser **104** identifies an abnormal vibration of the main shaft **60**, the rotation of the spindle **61** is stopped by the emergency stopper **105.** Moreover, a warning is issued by the warner **106.** In the present embodiment, a warning is issued as a warning message displayed on the display **111** of the control panel **110** or an external display.

Thus, the cutting machine **10** of the present embodiment includes the sensor **65** that is provided on the main shaft **60** to measure the vibration entailing the rotation of the spindle **61** and transmit a signal corresponding to the measured vibration, the receiver **103** that receives the signal from the sensor **65,** and the diagnoser **104** that identifies an abnormal vibration of the main shaft **60** when the vibration value measured by the sensor **65** exceeds a predetermined threshold value. In the present embodiment, the sensor **65** includes an acceleration sensor, and the vibration value is detected as an acceleration. With the cutting machine **10** of the present embodiment, it is possible to know when the main shaft **60** has an abnormal vibration due to aging or other reasons.

The threshold value is set based on a vibration value that is pre-measured by the sensor **65.** That is, the threshold value is set based on the vibration value measured before there is an apparent deterioration of the main shaft **60.** Thus, it is possible to check the abnormal vibration, irrespective of the individual difference between cutting machines **10.** Specifically, the threshold value is a value obtained by multiplying the pre-measured vibration value by a predetermined multiplication value.

Moreover, the threshold value is set in accordance with the number of revolutions of the spindle, and includes a threshold value for when the tool **210** is clamped by the clamp **64** and a threshold value for when the tool **210** is not clamped by the clamp **64.** The vibration value of the main shaft **60** normally varies depending on the number of revolutions and also on whether or not the tool **210** is clamped. It is possible to perform more detailed diagnoses because the threshold value is set in accordance with the number of revolutions of the spindle **61** and the threshold value includes a threshold value for when the tool **210** is clamped by the clamp **64** and another threshold value for when the tool **210** is not clamped by the clamp **64.**

In the present embodiment, when the diagnoser **104** identifies an abnormal vibration of the main shaft **60,** the emergency stopper **105** stops the rotation of the spindle **61.** Therefore, it is possible to prevent a serious failure of the cutting machine **10** and the loss of the workpiece **200** due to machining defect. When the diagnoser **104** identifies an abnormal vibration of the main shaft **60**, the warner **106** issues a warning. Thus, the user can know when the main shaft **60** has an abnormal vibration.

A cutting machine according to one embodiment has been described above. However, these embodiments are merely preferred examples, and are not intended to limit the cutting machine disclosed herein. For example, although the sensor **65** is attached to the outer surface of the casing **61b** of the spindle **61** in the embodiment described above, the sensor **65** may be attached to any position such that it is possible to detect the vibration of the main shaft **60.** There is no limitation on the position at which the sensor **65** is attached. The sensor **65** is not limited to those including an acceleration sensor, but may be of any other type.

Although the vibration of the main shaft **60** is measured while the spindle **61** is rotating in the embodiment described above, but the present invention is not limited to this. For example, the vibration of the main shaft **60** may be measured only during a start-up inspection, or the like. There is no limitation on when to measure the vibration of the main shaft **60.**

While one threshold value is set for when the tool **210** is clamped by the main shaft **60** and another threshold value for when the tool **210** is not clamped by the main shaft **60** in the embodiment described above (graph G2 and graph G4 in the case of FIG. **7**), two or more threshold values may be set for each case. For example, there may be a first threshold value for issuing a warning without stopping the rotation of the spindle **61**, and a second threshold value for stopping the rotation of the spindle **61** and issuing a warning. In such a case, the second threshold value may be set to be greater than the first threshold value.

In the embodiments described above, the tool **210** is moved in the Y direction and the Z1 direction, and the workpiece **200** is moved in the X1 direction and rotated in two directions, i.e., the T1 direction and the T2 direction. However, the positional relationship between the tool **210** and the workpiece **200** is relative, and there is no limitation on how they are moved.

Moreover, the shape of the workpiece and the shape of the tool are not limited to those described above, and there is no limitation on the method by which the holder member holds a workpiece, etc. The cutting machine may further include a dust collector for collecting dust that is from cut processes, a workpiece changer for automatically replacing workpieces. There is no particular limitation on the mechanical configuration of the cutting machine.

While preferred embodiments of the present invention have been described above, it is to be understood that variations and modifications will be apparent to those skilled in the art without departing from the scope of the present invention, which is to be determined solely by the following claims.

## Claims

1. A cutting machine (10) comprising:
a main shaft (60) having a spindle (61) that is configured to rotate;
a sensor (65) that is provided on the main shaft (60) to measure a vibration entailing the rotation of the spindle (61) and transmit a signal corresponding to the measured vibration; and
a controller (100), wherein:
the controller (100) includes:
a receiver (103) that is configured to receive a signal from the sensor (65); and
a diagnoser (104) that is configured to identify an abnormal vibration when a value of the measured vibration exceeds a predetermined threshold value.

2. The cutting machine (10) according to claim 1, wherein the sensor (65) includes an acceleration sensor.

3. The cutting machine (10) according to claim 1 or 2, wherein the threshold value is set based on a vibration value that is pre-measured by the sensor (65).

4. The cutting machine (10) according to claim 3, wherein the threshold value is obtained by multiplying the pre-measured vibration value by a predetermined multiplication value.

5. The cutting machine (10) according to any one of claims 1 to 4, wherein the threshold value is set in accordance with the number of revolutions of the spindle (61).

6. The cutting machine (10) according to any one of claims 1 to 5, wherein:
the spindle (61) includes a clamp (64) that is configured to clamp a tool (210);
the threshold value includes a threshold value for when the tool (210) is clamped by the clamp (64) and another threshold value for when the tool (210) is not clamped by the clamp (64).

7. The cutting machine (10) according to any one of claims 1 to 6, wherein the controller (100) includes an emergency stopper (105) that is configured to stop the rotation of the spindle (61) when the diagnoser (104) identifies an abnormal vibration.

8. The cutting machine (10) according to any one of claims 1 to 7, wherein the controller (100) includes a warner (106) that is configured to issue a warning when the diagnoser (104) identifies an abnormal vibration.
